# EUROPÄISCHE PATENTSCHRIFT

(11) **EP 1 151 603 B1**
(45) Veröffentlichungstag und Bekanntmachung des Hinweises auf die Patenterteilung: **02.01.2003**
(21) Anmeldenummer: 00901136.2
(22) Anmeldetag: 27.01.2000
(51) Int. Cl.: H04N 5/12

(54) **VERFAHREN ZUR DETEKTION DER HORIZONTAL- UND VERTIKALSYNCHRONIMPULSE IN EINEM VIDEOSIGNAL**
METHOD OF DETECTING THE HORIZONTAL AND VERTICAL SYNCHRONIZING PULSES IN A VIDEO SIGNAL
PROCEDE POUR DETECTER DES IMPULSIONS DE SYNCHRONISATION HORIZONTALES ET VERTICALES D'UN SIGNAL VIDEO

(30) Priorität: 12.02.1999 DE 19908070
(43) Veröffentlichungstag der Anmeldung: 07.11.2001
(73) Patentinhaber: Lear Automotive Electronics GmbH, 96317 Kronach (DE)
(72) Erfinder: ENGEL, Oliver, D-96242 Gestungshausen (DE)
(74) Vertreter: Eichstädt, Alfred, Dipl.-Ing.
(86) Internationale Anmeldenummer: EP0000617
(87) Internationale Veröffentlichungsnummer: WO00048392

(56) Entgegenhaltungen:
- US-A- 5 663 688
- US-A- 5 844 622
- LINDENMEIER ET AL.: "TV-Empfang im Auto" FUNKSCHAU, Nr. 6, 1995, Seiten 74-79, XP002135978 münchen

## Beschreibung

Die Erfindung betrifft ein Verfahren zur Detektion der Horizontal- und Vertikalsynchronimpulse in einem Videosignal in einer Schaltungsanordnung mit einer Synchronimpulsabtrennschaltung, mit der aus dem empfangenen und demodulierten Fernsehsignal die Horizontal- und/oder Vertikalimpulse selektiert werden.

Beim Fernsehsignalempfang, insbesondere beim Empfang mittels eines Fernsehempfängers in einem Kraftfahrzeug, ist das Problem gegeben, daß durch Reflexionen, Feldstärkeeinbrüche, Empfangsstörungen und dergleichen nicht sichergestellt ist, daß die Horizontal- und Vertikalimpulse, die für den Synchronbetrieb des Fernsehsignalempfängers, z.B. eines Fernsehempfangsgerätes, notwendig sind, empfangen werden können bzw. deren Qualität so schlecht ist, daß sie nicht verarbeitbar sind. Dies hat bei einem Fernsehempfangsgerät mit Bildröhre oder Flachdisplay unmittelbar zur Folge, daß das Bild in horizontater bzw. vertikaler Richtung durchrollt, durchfällt oder zittert. Bei entsprechender Schaltungstechnik kann es darüber hinaus vorkommen, daß beim Fahren das Bild völlig aussetzt und die Synchronisation sich erst wieder stabilisiert, wenn ein einwandfreier Empfang gegeben ist. Infolge der vorher beschriebenen Empfangsverhättnisse können beim mobilen Empfang verrauschte FBAS-Signale anliegen, so daß mit den Impulsabtrennschaltungen die Synchronimpulse nicht sauber abgetrennt bzw. nicht als Synchronimpulse detektiert werden können, da eine Vielzahl von Rauschspitzen am Ausgang der Impulsabtrennung anliegen. Betrachtet man dieses Rauschspektrum z.B. mit einem Oszilloskop, so ist nicht erkennbar, wo der eigentliche Synchronimputs liegt. Diese Probleme sind z. B. in der Fachzeitschrift Funkschau 1995, Heft 6, Seite 74 ff angegeben.

Aus der US 5,001,564 ist eine rauschunempfindliche Synchronsignal-Erzeugungseinrichtung für Zeilenkameras bekannt, welche nur während eines kleinen vorgegebenen Zeitfensters Impulse verarbeitet. Das vorher angestellte Problem stellt sich dabei nicht.

Aus der DE 37 22 567 A1 ist ein Verfahren zur Rahmensynchronisierung bei der Übertragung von Digitalsignalen bekannt, bei dem der Empfang eines Synchronwortes außerhalb eines von der Empfangseinrichtung bestimmten Erwartungszeitpunkts als Synchronverlust-Kriterium gewertet wird und der Empfang eines Synchronwortes zum Erwartungszeitpunkt als Synchronismus-Kriterium gewertet wird. Die Kriterien werden dabei summiert und bei Erreichen eines Maximalwertes eine Synchronisation der Empfangseinrichtung durch ein empfangenes Synchronwort bewirkt. Außerdem ist eine Schaltungsanordnung zur Realisierung des Verfahrens angegeben.

Weiterhin ist in der DE 35 06 449 C1 eine Schaltungsanordnung zur Detektion von Synchronsignalen in FS-Signalen mit einem Korrelator beschrieben, bei der die optimale Synchronisierphase aus der Verschiebung des zu korrelierenden Signalpaares gefunden wird. Der Korrelator umfaßt eine Kette von mindestens zwei Verzögerungsgliedern, denen das Eingangssignal als Folge digitaler Abtastwerte zugeführt wird. Das Eingangssignal des ersten Verzögerungsgliedes und die Ausgangssignale aller Verzögerungsglieder werden einer Kombinationsschaltung zugeführt, die die Signale linear kombiniert und integriert und die Ausgangssignale des Korrelators bildet

Aus der US-A-5,844,622 ist ein gattungsgemäßes Verfahren zur Detektion der Horizontal- und Vertikalsynchronimpulse bekannt Bei dem bekannten Verfahren werden Zeitfenster bildende Impulse generiert und Impulsflanken registriert. Dabei werden laufend die Häufigkeiten von Impulsflanken innerhalb der Fenster ermittelt und je nach dem, ob eine Flanke innerhalb des Fensters liegt oder nicht, ein Zähler dekrementiert oder inkrementiert. Zur Generierung von Hsync-lmpulsen wird ein Ausgangssignal ausgegeben, falls eine hohe Übereinstimmung festgestellt wurde und der Zähler nicht einen bestimmten Maximalwert erreicht. Ein anderes Ausgangssignal wird ausgegeben, wenn eine hohe Übereinstimmung nicht festgestellt wird, welches eine Fensterverschiebung auslöst.

Ausgehend von der eingangs beschriebenen Problemstellung liegt der Erfindung die Aufgabe zugrunde, ein Verfahren und eine Schaltungsanordnung anzugeben, die auch dann, wenn ein verrauschtes Signal anliegt, die Horizontal- und Vertikalimpulse mit höchster Präzision feststellen können.

Die Aufgabe löst die Erfindung durch die im Anspruch 1 angegebenen Verfahrensschritte sowie durch eine Schaltungsanordnung zur Durchführung des Verfahrens gemäß Anspruch 5.

Weitere vorteilhafte Verfahrensschritte sind in den Ansprüchen 2 bis 4 und weitere vorteilhafte Weiterbildungen der Schaltung in den Ansprüchen 6 bis 9 angegeben.

Nach der Erfindung befindet sich am Eingang einer Horizontal- und Vertikalsynchronimpuls-Aufbereitungsschaltung, z.B. einer Stabilisierungsschaltung, ein spezieller Impulsdetektor, der unmittelbar der Impulsabtrennschaltung nachgeschaltet ist. Dieser Impulsdetektor erkennt alle ansteigenden und/oder auch alle abfallenden Flanken aller Impulse, die im Bereich des möglichen Synchronimpulses im FBAS-Signal vorhanden sind, insbesondere auch alle Rauschspitzen bei schlechtem Empfang, und wertet diese nach einem statistischen Verfahren aus, so daß mit hoher Zuverlässigkeit angegeben werden kann, welche detektierten Signalflanken den korrekten Synchronimpuls einleiten und welche nicht. Erkennt der Impulsdetektor Signafflanken korrekter Horizontal- und Vertikalsynchronimpulse, so leitet er diese weiter an eine nachgeschaltete Stabilisierungsschaltung mit einem Frequenz- und Phasenregler oder eine andere Signalgeneratorschaltung. Bevor aber solche Impulse ausgegeben werden, ist ein statistisches Auswerte-Verfahren vorgesehen, um mit hoher Wahrscheinlichkeit die die Synchronimpulse einleitenden Flanken zu bestimmen. Es werden also die Flanken, die sich im Zeitraster der Horizontatfrequenz mehrerer Zeitfenster bewegen, analysiert Wenn z.B. die Flanken mit einer statistischen Wahrscheinlichkeit von mehr als 25 % in der definierten Mindestanzahl von Zeitfenstern auftreten, dann kann davon ausgegangen werden, daß innerhalb der Zeitfenster die Flanken eines korrekten Synchronsignals festgestellt worden sind, das dann vom Impulsgenerator von der ersten Flanke gesteuert, generiert und als solches periodisch ausgegeben wind, um z. B. nach einer Stabilisierung oder auch unstabilisiert in das FBAS-Signal anstelle des dort vorhandenen verrauschten Signals eingefügt werden zu können. Die Erkennung der Flanken, die in den Zeitfenstern liegen, erfolgt in der Weise, daß der Impulsgenerator, der sich noch nicht im eingeschwungenen Zustand befindet, auf die erste Flanke des Composite Synchronsignals triggert. Der Impulsdetektor erzeugt Impulse im Abstand von 64 µs (z.B. bei der PAL-Norm), also genau mit der Horizontalfrequenz, und bildet die Zeitfenster. Diese Impulse sind allerdings sehr schmal. In diese Zeitfenster - in Folge - fallen bei korrekten Synchronsignalen auch die nächsten Flanken wieder hinein. Fällt eine weitere Signalflanke tatsächlich in das Zeitfenster ein, so wird anschließend der Zählerstand eines Häufigkeitszählers erhöht Der Häufigkeitszähler muß kein Zähler im eigentlichen Sinne sein, sondern kann ein Verhältnis von detektierten Impulsen zu den erwarteten Impulsen bilden. Dieser Verhältniswert wird mit Schwellenwerten verglichen und in Abhängigkeit davon bei Unterschreiten eines bestimmten Wahrscheinlichkeitswertes dazu herangezogen, um das Zeitfenster auf die nächste Signalflanke oder eine der nächsten Signalflanken der selektierten Impulse zu triggern, so daß eine zeitliche Verschiebung gegeben ist. Danach werden die im Anspruch 1 angegebenen Verfahrensschritte wiederholt durchgeführt, solange, bis durch die Verschiebung eine Detektionsstelle gefunden ist, die eine hohe Wahrscheinlichkeit bzw. Übereinstimmung der Impulse in den einzelnen Zeitfenstem definierter Anzahl zeigt und vermuten läßt, daß mit der jetzt gegebenen Anstiegsflanke des ersten Impulses ein normgerechter Synchronimpuls generiert werden kann, der als Ersatzimpuls in das FBAS-Signal eingebunden werden kann. Der Synchronimpuls selbst wird durch einen nachgeschalteten Impulsgenerator erzeugt.

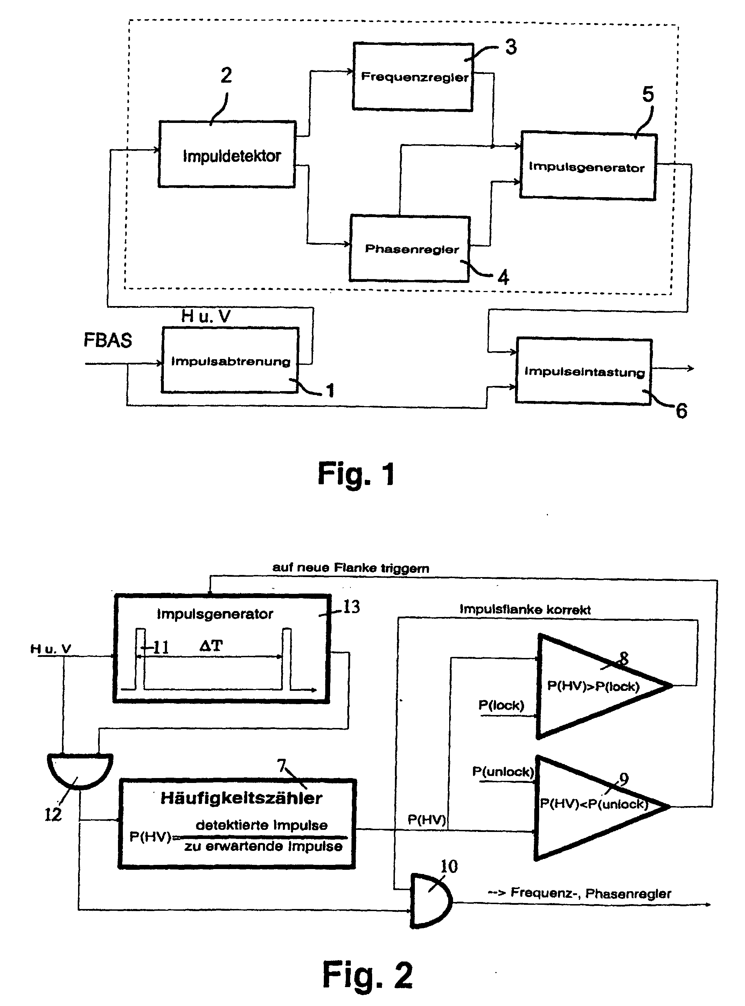

Die Erfindung wird nachfolgend anhand der in den Fig. 1 und 2 dargestellten Ausführungsbeispiele erläutert.

Das Blockschaltbild gemäß Fig. 1 vermittelt einen Überblick über eine Horizontal- und Vertikalsynchronisationsschaltung, die in Verbindung mit dem erfinderischen Verfahren, das in dem Impulsdetektor realisiert ist, eingesetzt wird. Das am Eingang anliegende FBAS-Signal, das demodulierte empfangene Signal, wird einer Impulsabtrennschaltung 1 zugeführt, an deren Ausgang Synchronimpulse anliegen, die aus einer Vielzahl von Rauschspitzen oder verrauschten Signalen bestehen können, was jeweils von den Empfangsverhältnissen und von der Empfangsqualität der Signale abhängt. Diese Signale beinhalten zwar Horizontal- und Vertikalsynchronsignale, sind bei verrauschtern Signal bzw. bei beeinträchtigten Empfangsverhältnissen aber nicht geeignet, um direkt für die Ablenkersteuerung eines Fernsehgerätes mit Flachdisplay oder Bildröhre herangezogen werden zu können. Die Signale werden deshalb dem nachgeschalteten Impulsdetektor 2 zugeführt, in welchem das erfinderische Verfahren realisiert ist und der den in Fig. 2 angegebenen prinzipiellen Aufbau aufweist. Am Ausgang des Impulsdetektors 2 liegen die Horizontal- und Vertikalimpulse an, die in das FBAS-Signal anstelle der verrauschten Synchronsignale eingestanzt werden können. Die Signale werden zunächst aber, wie das Blockschaltbild weiter zeigt, einem Frequenzregler 3 und einem Phasenregler 4 (PLL-Schaltungen) eines Stabilisators zugeführt, deren Ausgänge mit einem Impulsgenerator 5 verbunden sind, der stabilisierte Horizontal- und Vertikalsynchronimpulse abgibt. Die absolut zeitgenauen, pegelrichtigen, generierten Synchronimpulse werden über die Impulseintastschaltung 6 in das an dessen zweitem Eingang anliegende Videosignal wieder eingebracht, so daß an dem Ausgang ein FBAS-Signal mit stabilisierten Horizontal- und Vertikalimpulsen anliegt, das von den Nachfolgeschaltungen des Fernsehgerätes verarbeitet werden kann.

Um zunächst einmal brauchbare Horizontal- und Vertikalimpulse zu generieren, die der in Fig. 1 angegebenen Stabilisierungsschaltung aus dem Frequenzregler 3, dem Phasenregler 4 und dem Impulsgenerator 5 zugeführt werden können, werden die aus dem Eingangssignal abgetrennten, die die Horizontal- und Vertikalimpulse umfassen können, einem Impulsgenerator zugeführt, der in Fig. 2 dargestellt ist und der, wie die gesamte Schaltung in Fig. 2, durch Software realisiert werden kann. Im Falle der Verwendung eines komplexen programmierbaren Logic-Bausteins kann die Schaltung auch soffwaremäßig realisiert werden. Der Impulsdetektor 2, der aus dem Impulsgenerator 13, dem Häufigkeitszähler 7, den Komparatoren 8, 9 und den Logicbausteinen (UND-Glieder) 12 und 10 besteht, erkennt alle ansteigenden und fallenden Flanken der einzelnen Impulse, die innerhalb eines Synchronsignals empfangen werden können, und wertet diese nach einem statistischen Verfahren aus, so daß mit hoher Zuverlässigkeit eine Aussage dazu gegeben werden kann, welche Flanke der einzelnen Impulssignale den korrekten Synchronimpuls einleitet und welche nicht. Zu diesem Zweck generiert der Impulsgenerator 13 Zeitfenster 11 in Form von Impulsen, deren Längen kleiner sind als die Länge der tatsächlichen Synchronimpulse, und zwar wiederholt mit der Ablenkfrequenz, nämlich z.B. bei der PAL- und NTSC-Norm im Abstand von 64 µs; sie werden also horizontatfrequent generiert. Mit dem Impulsgenerator 13 werden Zeitfenster 11 in Folge gebildet, in die bei Empfang eines korrekten Synchronsignals auch die nächsten Flanken eines solchen Impulses hineinfallen sollten. Fallen diese tatsächlich in das folgende Zeiffenster, also gibt es nach 64 µs wieder eine Flanke eines Synchronimpulses, so wird anschließend ein Häufigkeitszähler 7 aktiviert, der die Häufigkeit in einer vorgegebenen Anzahl von Zeitfenstern zählt. Der Häufigkeitszähler 7 ist als solcher bezeichnet, ist aber kein Zähler im eigentlichen Sinne, sondern bildet ein Verhältnis von den detektierten Impulsen zu den zu erwartenden Impulsen. Ein Beispiel mag dieses veranschaulichen.

Erwartet werden in 100 Zeilen 100 Impulse. Von diesen 100 Zeilen werden nur 15 übereinstimmende Flanken von Synchronimpulsen bzw. Rauschimpulsen innerhalb des Synchronsignals in den Zeitfenstern registriert. Alle andere Synchronsignale bzw. Impulse mit ihren Flanken, die nicht in das Zeitfenster fallen, werden also vollständig ignociert. Die detektierten 15 impulse drücken eine Wahrscheinlichkeit von 15 % aus, daß es sich dabei tatsächlich um die einleitenden Flanken von Synchronimpulsen handelt. Diese Wahrscheinlichkeit wird fortwährend korrigiert und variiert je nach Signal, ob es verrauscht ist oder nicht. Mit dieser Wahrscheinlichkeit werden die nachgeschalteten Logikblöcke, nämlich die Komparatoren 8 und 9, beaufschlagt. Diese Komparatoren vergleichen den Wahrscheinlichkeitswert mit vorgegebenen Schwellwerten, die als P(lock) und P(unlock) bezeichnet sind. Ergibt sich, daß die Wahrscheinlichkeit P(HV) > P(lock) ist, so gibt der Komparator 8 ein Ausgangssignal ab, das symbolisiert, daß die detektierte Impulsflanke korrekt ist . Die Horizontal- bzw. Vertikalimpulse, die an einem Eingang des logischen Gatters 12 anliegen, werden auch über das UND-Glied 10 durchgeschaltet, um nach Aufbereitung über die Eintastschaltung 6 in das FBAS-Signal eingestanzt werden zu können.

Wird jedoch durch den Wahrscheinlichkeitswert festgestellt, daß nicht auf eine Flanke eines korrekten Synchronsignals getriggert wurde, so wird der Schwellwert P(unlock) aktiv, d.h. die Bedingung P(HV) < P(unlock) ist im Komparator 9 realisiert, so daß dieser ein Signal an den Impulsgenerator 13 abgibt, um diesen zu veranlassen, auf eine neue Flanke zu triggem, d.h. die Zeitfenster 11, die durch die Impulse gebildet sind, zeitlich auch zu verschieben, um mit der nächsten Impulsflanke beginnend verschobene Impulse auszugeben. Die UND-Glieder 10, 12 bleiben dann gesperrt H,V-Impulse liegen am Ausgang nicht an. Dieser Vorgang kann so lange fortgesetzt werden, bis die Häufigkeit einen Wahrscheinlichkeitswert zeigt, der mit hoher Wahrscheinlichkeit angibt, daß die richtige Flanke des Synchronimpulses detektiert ist, um die folgenden Synchronimpulse durchleiten zu können. Der Impulsgenerator 13 wird also auf die nächste Flanke, die sich z.B. in einem Abstand von 10 µs zum ursprünglichen befindet, rastend weitergetriggert. Mit dem Zeitfenster wird praktisch der gesamte Bereich des möglichen Synchronsignals durchlaufen, bis die Wahrscheinlichkeit anzeigt, daß auf die richtigen Flanken getriggert wurde.

## Patentansprüche

1. Verfahren zur Detektion der Horizontal- und Vertikalsynchronimpulse in einem Videosignal in einer Schaltungsanordnung mit einer Synchronimpulsabtrennschaltung, mit.der aus dem empfangenen und demodulierten Fernsehsignal die Horizontal- und/oder Vertikalimpulse selektiert werden, **gekennzeichnet durch** folgende Merkmale:
a) Generieren von Zeitfenster bildenden Impulsen mit einer Länge, die kleiner ist als die nominale Länge des genormten Horizontalimpulsslgnals und mit einer Wiederholungsfrequenz, die der Horizontalsynchronsignalfrequenz entspricht, mittels eines Impulsgenerators in Abhängigkeit von einer Flanke eines empfangenen Impulses im Bereich eines möglichen empfangbaren und abgetrennten Horizontalsynchronimpulses;
b) Registrieren mindestens einer der in die anzahlmäßig definierten, sich wiederholenden Zeitfenster eines Meßzyklus fallenden ansteigenden und/oder abfallenden Impulsflanken;
c) Statistische Auswertung der in den Zeitfenstern eines Meßzyklus registrierten Häufigkeiten von Impulsflanken;
d) Ausgeben eines Ausgangssignals bei festgestellten Impulsflanken in den Zeitfenstern in Abhängigkeit von einer statistischen Auswertung zur Generierung eines Horizontal- und/oder Vertikalimpulses oder **durch** Freischaltung der empfangenen selektierten Horizontal- und/oder Vertikalimpulse;
e) Ausgeben eines Ausgangssignals im Falle des Nichterreichens einer festgelegten Wahrscheinlichkeit bei der statistischen Auswertung zur Steuerung des die Horizontal- oder Vertikalimpulse generierenden Impulsgenerators, derart, daß dieser die Generierung der Zeitfenster auf eine andere Signalflanke hin verschiebt und die Verfahrensschritte solange wiederholt werden, bis eine hohe Übereinstimmung von Impulsflanken in den Zeitfenstern gegeben ist, wobei
f) die statistische Auswertung über eine Vielzahl von Zeilen erfolgt und die festgestellte Anzahl von Impulsflanken ein Maß für die Wahrscheinlichkeit ist und die entsprechende Anzahl als Wert mit mindestens einem Schwellwert verglichen wird, und
g) im Falle eines Wahrscheinlichkeitswertes über dem Schwellwert ein Signal generiert wird, das anzeigt, daß die richtigen Signalflanken der Synchronimpulse anliegen, wodurch diese an die nachgeschalteten Signalverarbeitungsschaltungen durchgeschaltet oder Synchronimpulse generiert werden, und daß im Falle des Unterschreitens des Schwellwertes oder eines anderen definierten Schwellwertes der Impulsgenerator veranlaßt wird, auf die nächstankommende Flanke zu triggern und phasenverschobene Zeitfenster generiert werden.

2. Verfahren nach Anspruch 1, **dadurch gekennzeichnet, daß** der Meßzyklus durch die festgestellte Wahrscheinlichkeit definiert ist und zwischen zwei Wahrscheinlichkeitsschwellwerten unterschieden wird.

3. Verfahren nach Anspruch 1 oder 2, **dadurch gekennzeichnet, daß** der Impulsgenerator auf eine nächste ankommende Flanke triggert, wobei die Fortschaltung solange erfolgt, bis der Wahrscheinlichkeitswert größer als der Referenzwert ist und die Auswertung anzeigt, daß der Synchronimpuls gefunden worden ist.

4. Verfahren nach Anspruch 1 oder 2, **dadurch gekennzeichnet, daß** für die statistische Auswertung die registrierten Signalflanken im Synchronimpulsbereich abhängig vom Rauschgrad des Empfangssignals ausgewertet werden.

5. Schaltungsanordnung zur Durchführung des Verfahrens nach einem der vorhergehenden Ansprüche, aufweisend:
einen Impulsgenerator (13), der Zeitfenster (11) Im Horizontalraster (ΔT) nach Anstoß durch eine Flanke eines Impulses im Bereich der Synchronimpulse generiert,
eine Zählschaltung (7), die die Signalflanken mindestens eines in jedes Zeitfenster fallenden Impulses über mehrere Horizontalperioden registriert, eine Rechenschaltung, die die Anzahl der detektierten Impulsflanken durch die Anzahl der zu erwartenden Impulse dividiert und so die Wahrscheinlichkeit P(HV) bestimmt, mindestens eine Komparatorschattung (8, 9), die den Wahrscheinlichkeitswert mit einem Schwellwert vergleicht, wobei bei Überschreiten des Wertes ein über eine Logikschaltung (10) anliegender Synchronimpuls durchgeschaltet und der Impulsgenerator (13) festgesetzt wird, bis die statistische Häufigkeit eine Mindestwahrscheinlichkeit unterschreitet, und daß bei Unterschreiten ein Signal den Impulsgenerator (13) veranlaßt, mit der nächsten Signalflanke die Zeitfenster (11) zu generieren, wobei die Berechnungen und Korrekturen kontinuierlich erfolgen.

6. Schaltungsanordnung nach Anspruch 5, **dadurch gekennzeichnet, daß** zwei Komparatorschaltungen (8, 9) vorgesehen sind, wobei die erste Komparatorschaltung (8) den Wahrscheinlichkeitswert mit einem ersten Schwellwert vergleicht und bei Überschreiten desselben ein Ausgangssignal abgibt, das signalisiert, daß die Impulsflanken korrekt sind, und daß der zweite Komparator (9) den Wahrscheinlichkeitswert mit einem zweiten Schwellenwert vergleicht und bei Unterschreiten desselben ein Ausgangssignal an den Impulsgenerator (13) zum Verschieben der Impulsfenster (11) abgibt.

7. Schaltungsanordnung nach Anspruch 6, **dadurch gekennzeichnet, daß** die Ausgangssignale eine logische Schaltung (10) steuem und die empfangenen Horizontal- und Vertikalimpulse durchschalten oder einen Generator steuern, der in Abhängigkeit vom Ausgangssignal bei Feststellung korrekter Impulsflanken H- und V-lmpulse generiert.

8. Schaltungsanordnung nach einem der Ansprüche 5 bis 7, **dadurch gekennzeichnet, daß** sie in einen ASIC allein oder mit einer Stabilisierungsschaltung für die H- und V-lmpulse integriert ist

9. Schaltungsanordnung nach einem der Ansprüche 5 bis 7, **dadurch gekennzeichnet, daß** sie ein programmierbarer Logic-Baustein ist.

## Claims

1. Method for the detection of horizontal and vertical synchronisation pulses in a video signal in a circuit arrangement with a synchronisation pulse separation circuit, by which the horizontal and/or vertical pulses are selected from the received and demodulated television signal, **characterised by** the following features:
a) Generation of pulses, which form time windows, with a length which is less than the nominal length of the standard horizontal pulse signal and with a repetition frequency which corresponds with the horizontal synchronisation signal frequency, by means of a pulse generator in dependence on a flank of a received pulse in the region of a possible receivable and separated horizontal synchronisation pulse:
b) registration of at least one of the rising and/or falling pulse flanks occurring in the repeating time window, which is defined in terms of number, of a measuring cycle;
c) statistical evaluation of the frequencies, which are registered in the time windows of a measuring cycle, of pulse flanks;
d) issue of an output signal in the case of pulse flanks established in the time windows in dependence on a statistical evaluation for generation of a horizontal and/or vertical pulse or by clearing the received selected horizontal and/or vertical pulses;
e) issue of an output signal, in the case of non-attainment of an established probability in the statistical evaluation, for control of the pulse generator, which generates the horizontal or vertical pulses, in such a manner that this displaces the generation of the time window to another signal flank and repeats the method step until a high degree of correspondence of pulse flanks in the time windows is given, wherein
f) the statistical evaluation is carried out over a plurality of lines and the established number of pulse flanks is a measure for the probability and the corresponding number as a value is compared with at least one threshold value, and
g) in the case of a probability value above the threshold value a signal is generated which indicates that the correct signal flanks of the synchronisation pulses are present, whereby these are switched through to the downstream signal processing circuits or synchronisation pulses are generated, and that in the case of a falling below the threshold value or another defined threshold value the pulse generator is caused to trigger at the next-arriving flank and phase-displaced time windows are generated.

2. Method according to claim 1, **characterised in that** the measuring cycle is defined by the established probability and distinction is made between two probability threshold values.

3. Method according to claim 1 or 2, **characterised in that** the pulse generator triggers at a next-arriving flank, wherein the continuous-switching operation is carried out until the probability value is greater than the reference value and the evaluation indicates that the synchronisation pulse has been found.

4. Method according to claim 1 or 2, **characterised in that** for the statistical evaluation the registered signal flanks in the synchronisation pulse region are evaluated in dependence on the degree of noise of the received signal.

5. Circuit arrangement for carrying out the method according to one of the preceding claims, comprising: a pulse generator (13), which generates the time windows (11) in the horizontal field (ΔT) after triggering by a flank of a pulse in the region of the synchronisation pulses, a counting circuit (7), which registers the signal flanks of at least one pulse, which drops into each time window, over several horizontal periods, a computing circuit, which divides the number of detected pulse flanks by the number of pulses to be expected and thus determines the probability P(HV), at least one comparator circuit (8, 9), which compares the probability value with a threshold value, wherein in the case of exceeding the value a synchronisation pulse present by way of a logic circuit (10) is switched through and the pulse generator (13) is fixed until the statistical frequency falls below a minimum probability, and that in the case of falling below the value a signal causes the pulse generator (13) to generate the time window (11) at the next signal flank, wherein the calculations and corrections take place continuously.

6. Circuit arrangement according to claim 5, **characterised in that** two comparator circuits (8, 9) are provided, wherein the first comparator circuit (8) compares the probability value with a first threshold value and on exceeding of the same delivers an output signal which signals that the pulse flanks are correct and that the second comparator (9) compares the probability value with a second threshold value and on falling below the same delivers an output signal to the pulse generator (13) for displacement of the pulse window (11).

7. Circuit arrangement according to claim 6, **characterised in that** the output signals control a logic circuit (10) and switch through the received horizontal and vertical pulses or control a generator which generates horizontal and vertical pulses in dependence on the output signal in the case of establishing correct pulse flanks.

8. Circuit arrangement according to one of claims 5 to 7, **characterised in that** it is integrated in an ASIC by itself or with a stabilisation circuit for the horizontal and vertical pulses.

9. Circuit arrangement according to one of claims 5 to 7, **characterised in that** it is a programmable logic module.

## Revendications

1. Procédé de détection d'impulsions de synchronisation horizontale et verticale dans un signal vidéo dans un système de circuit avec un circuit de séparation des impulsions de synchronisation, avec lequel on sélectionne les impulsions horizontales et/ou verticales à partir du signal de télévision reçu et démodulé, **caractérisé par** les étapes consistant à :
a) générer des impulsions créant des fenêtres de temps d'une longueur qui est inférieure à la longueur nominale du signal d'impulsion horizontale normalisé et à une fréquence de répétition qui correspond à la fréquence de signal de synchronisation horizontale, au moyen d'un générateur d'impulsion en fonction d'un front d'une impulsion reçue dans la plage d'une impulsion de synchronisation horizontale possible, pouvant être reçue et séparée ;
b) enregistrer au moins l'un des fronts d'impulsion montants et/ou descendants tombant dans les fenêtres de temps d'un cycle de mesure, dont le nombre est défini qui se répètent ;
c) évaluer statistiquement les fréquences de fronts d'impulsion enregistrées dans les fenêtres de temps d'un cycle de mesure ;
d) délivrer un signal de sortie en cas de fronts d'impulsion constatés dans les fenêtres de temps en fonction d'une évaluation statistique pour générer une impulsion horizontale et/ou verticale ou en déverrouillant les impulsions horizontales et/ou verticales sélectionnées reçues ;
e) délivrer un signal de sortie au cas où une probabilité déterminée ne serait pas atteinte lors de l'évaluation statistique pour commander le générateur d'impulsion générant les impulsions horizontales et verticales, de telle sorte que celui-ci décale la génération de la fenêtre de temps jusqu'à un autre front de signal et que les étapes sont répétées jusqu'à ce qu'une haute coïncidence de fronts d'impulsion soit donnée dans les fenêtres de temps,
f) l'évaluation statistique étant effectuée pour une pluralité de lignes et le nombre constaté de fronts d'impulsion est une mesure de la probabilité et le nombre correspondant est comparé comme une valeur à au moins une valeur de seuil, et
g) dans le cas d'une valeur de probabilité au-dessus de la valeur de seuil, un signal étant généré qui indique que les fronts de signal corrects des impulsions de synchronisation sont présents, de manière à que celles-ci soient retransmises aux circuits de traitement de signal intercalés à la suite ou des impulsions de synchronisation soient générées, et en ce qu'en cas de soupassement de la valeur de seuil ou d'une autre valeur de seuil définie, le générateur d'impulsion est amené à se déclencher au front entrant suivant et des fenêtres de temps déphasées sont générées.

2. Procédé selon la revendication 1, **caractérisé en ce que** le cycle de mesure est défini par la probabilité constatée et **en ce que** l'on distingue deux valeurs de seuil de probabilité.

3. Procédé selon la revendication 1 ou 2, **caractérisé en ce que** le générateur d'impulsion se déclenche à un front entrant suivant, le réenclenchement étant effectué jusqu'à ce que la valeur de probabilité soit supérieure à la valeur de référence et l'évaluation indique que l'impulsion de synchronisation a été trouvée.

4. Procédé selon la revendication 1 ou 2, **caractérisé en ce que**, pour l'évaluation statistique, les fronts de signal enregistrés sont évalués dans la plage des impulsions de synchronisation en fonction du niveau de bruit du signal de réception.

5. Système de circuit pour réaliser le procédé selon l'une quelconque des revendications précédentes, comprenant :
un générateur d'impulsion (13) qui génère des fenêtres de temps (11) dans la trame horizontale (ΔT) après déclenchement par un front d'une impulsion dans la plage des impulsions de synchronisation,
un circuit de comptage (7) qui enregistre sur plusieurs périodes horizontales les fronts de signal d'au moins une impulsion tombant dans chaque fenêtre de temps,
un circuit de calcul qui divise le nombre des fronts d'impulsion détectés par le nombre des impulsions attendues et détermine ainsi la probabilité P(HV),
au moins un circuit de comparateur (8, 9) qui compare la valeur de probabilité à une valeur de seuil, en cas de dépassement d'une valeur, une impulsion de synchronisation présente par l'intermédiaire d'un circuit logique (10) étant retransmise et le générateur d'impulsion (13) étant défini jusqu'à ce que la fréquence statistique passe sous une probabilité minimale, et en cas de soupassement, un signal amenant le générateur d'impulsion (13) à générer les fenêtres de temps (11) avec le front de signal suivant, les calculs et corrections étant effectués en continu.

6. Système de circuit selon la revendication 5, **caractérisé en ce que** deux circuits de comparateur (8, 9) sont prévus, dans lequel le premier circuit de comparateur (8) compare la valeur de probabilité à une première valeur de seuil, et en cas de dépassement de celle-ci, délivre un signal de sortie qui signale que les fronts d'impulsion sont corrects, et le deuxième comparateur (9) compare la valeur de probabilité à une deuxième valeur de seuil, et qu'un cas de soupassement de celle-ci, il délivre un signal de sortie au générateur d'impulsion (13) pour décaler les fenêtres d'impulsion (11).

7. Système de circuit selon la revendication 6, **caractérisé en ce que** les signaux de sortie commandent un circuit logique (10) et retransmettent les impulsions horizontales et verticales reçues ou commandent un générateur qui génère des impulsions H et V en fonction du signal de sortie si des fronts d'impulsion corrects sont constatés.

8. Système de circuit selon l'une quelconque des revendications 5 à 7, **caractérisé en ce qu'**il est intégré dans un ASIC seul ou avec un circuit de stabilisation pour les impulsions H et V.

9. Système de circuit selon l'une quelconque des revendications 5 à 7, **caractérisé en ce qu'**il est un élément logique programmable.
